# EUROPEAN PATENT SPECIFICATION

(11) **EP 2 303 675 B1**
(45) Date of publication and mention of the grant of the patent: **18.01.2012**
(21) Application number: 09762048.8
(22) Date of filing: 10.06.2009
(51) Int. Cl.: B62K 25/02

(54) **QUICK RELEASE CLAMP FOR A BICYCLE WHEEL**
SCHNELLLÖSEKLEMME FÜR EIN FAHRRAD-RAD
SYSTÈME DE SERRAGE À LIBÉRATION RAPIDE POUR ROUE DE BICYCLETTE

(30) Priority: 10.06.2008 BE 200800319
(43) Date of publication of application: 06.04.2011
(73) Proprietor: Gimari Bvba, 2288 Grobbendonk (Bouwel) (BE)
(72) Inventor: ROSIERS, Dirk, Wim, Peter, B-8800 Roeselare (BE); CORNETTE, Gaspar, Jozef, B-8800 Roeselare (BE); MATTAN, Nico, Gustaf, B-8880 Sint-Eloois-Winkel (BE)
(74) Representative: Ostyn, Frans
(86) International application number: PCT/IB2009/005900
(87) International publication number: WO 2009/150518

(56) References cited:
- CH-A- 157 505
- DE-C- 806 201
- FR-A- 957 942
- GB-A- 189 702 793
- US-A- 5 383 716

## Description

Firstly, the present invention relates to a quick-release clamp for rotatably fitting a wheel, which comprises a wheel hub, between the teeth of a fork of a cycle, in which this quick-release clamp comprises a threaded shaft, which is designed to be rotatably fitted through the wheel hub, and comprises first and second clamping means which are designed to be attached at the ends of the threaded shaft, respectively, in which these clamping means are a first and a second cam handle, with each cam handle comprising an eccentric part which, after the cam handle has been fitted on the threaded shaft, is rotatable about an axis at right angles to the threaded shaft and eccentric with respect to this eccentric part, and comprises a handle, which is connected to the eccentric part in order to rotate the eccentric part with respect to the threaded shaft by means of this handle and in which these clamping means, after they have been fitted on the threaded shaft, are rotatable between an open position, intended to fit the wheel on the fork or to remove it therefrom, and a closed position, intended to clamp the wheel with the wheel hub between the teeth of the fork. Secondly, the present invention relates to a wheel and a cycle provided with a quick-release clamp of this type.

There are various kinds of cycles in which a wheel, which comprises a wheel hub, is fitted between the teeth of a fork of this cycle. The most common of these cycles are two-wheeled cycles, such as bicycles, mopeds and motorcycles. Such a cycle, in which a wheel is fitted between the teeth of a fork of the cycle, may equally well be a cycle provided with three or four wheels.

Often, the wheels of such cycles are rotatably fitted between the teeth of the corresponding fork by pushing a threaded shaft or a variant thereof, forming a shaft being threaded at the ends, through the wheel hub and fixing the wheel with the wheel hub between the teeth of the fork by means of nuts which are provided on the ends of the threaded shaft. The wheel and the wheel hub are in this case designed to be rotatable about the threaded shaft, while the threaded shaft, which is an axle provided with screw thread at the ends, is clamped between the teeth of the fork using the nuts. Equally, a fixed head is provided at one of the two ends, while a nut is provided at the other end. Various variants of this system are in use.

Variants of such systems are e.g. described in FR 957 942 A, CH 157 505 A and GB 02793 A.

A drawback of fitting a wheel in such a manner is, however, that the fixing on and releasing from the bicycle is generally time-consuming and laborious, and most often requires the use of a hand tool, such as a nut spanner. If this wheel has to be replaced due to a puncture, at least one nut and preferably both nuts have to be loosened by turning them around the threaded shaft or variant thereof, where necessary using a nut spanner, before the wheel can be removed from the fork. When replacing a wheel, said wheel also has to be fixed again by means of a nut spanner.

In order to make fitting a wheel between the teeth of a fork easier, so-called quick-release clamps have been developed. Such quick-release clamps, as described, for example in DE 806 201 C, US 4,400,038 and US 4,906,053, usually comprise a threaded shaft which is provided with a clamping means on one side and an adjustment nut at the other end. The clamping means is in this case fixedly provided at the one end of the threaded shaft, whereas the position of the adjustment nut is adjustable. The clamping means can be rotated between an open position, intended to place the wheel in the fork or remove it therefrom, and a closed position, intended to rotatably clamp the wheel with the wheel hub between the teeth of the fork. The threaded shaft is pushed into the wheel hub, so that the wheel with the wheel hub can rotate about the latter. The adjustment nut is adjusted in such a manner that when the clamping means is rotated into the closed position, the wheel can be fixed well between the teeth of the corresponding fork of the cycle.

However, it is a drawback of these quick-release clamps that, in practice, when rotating the clamping means into the open position to loosen the wheel from the fork, there is not sufficient clearance to be able to take the wheel out of the fork easily. Analogously, in this open position of the clamping means, there is insufficient clearance to fit the wheel onto the fork in a simple manner. Therefore, in practice, the adjustment nut will be unscrewed in order to achieve a greater clearance and enable a wheel to be fitted or removed in a simple manner. Thus, the advantage of fitting a wheel easily is lost, as the wheel again has to be fitted or removed using a hand tool, such as a nut spanner.

A further drawback of these quick-release clamps is that, in practice, a wheel is often fitted at an angle in a fork when such quick-release clamps are used, as a result of which the wheel cannot readily spin and consequently the cycle cannot be ridden in an optimum manner. This increases the risk of the wheel coming loose again during use of the cycle.

In order to produce a greater clearance so as to be able to readily fit a wheel between the teeth of the fork of a cycle or to readily remove it therefrom, the use of a quick-release clamp as described in US 5,383, 716 may be considered. This quick-release clamp comprises a threaded shaft, intended to be fitted rotatably through the wheel hub, and first and second clamping means which are intended to be attached to the respective ends of the threaded shaft, in which these clamping means are a first and a second cam handle, with each cam handle comprising an eccentric part which, after the cam handle has been fitted on the threaded shaft, is rotatable about an axis at right angles to the threaded shaft and eccentric with respect to this eccentric part, and comprises a handle, which is connected to the eccentric part in order to rotate the eccentric part with respect to the threaded shaft by means of this handle and with these clamping means, after having been fitted on the threaded shaft, being rotatable between an open position, intended to fit the wheel on the fork or remove it therefrom, and a closed position, provided to rotatably clamp the wheel with the wheel hub between the teeth of the fork.

Due to the larger clearance which results from the use of two clamping means, this quick-release clamp does not require re-adjustment each time a wheel has been fitted or removed. Once the distance between the clamping means has been set correctly, it is possible to readily fit the wheel in the fork or remove it therefrom using this quick-release clamp, when the clamping means are in their open position.

In practice, however, attaching or detaching a wheel using such a quick-release clamp is still cumbersome, since the clamping means tend to be pulled out of alignment with respect to one another when they are being opened or closed.

In addition, such a quick-release clamp cannot readily be adjusted to the various distances between the teeth of forks of cycles. In order to ensure that the clamping means are in alignment with respect to one another, they always have to be rotated by complete screw turns. This quick-release clamp thus makes it nearly impossible to achieve an optimum adjustment of the distance between the clamping means and to fix a wheel securely with the correct tension between the teeth of the fork of a cycle.

It is therefore an object of the present invention to provide a quick-release clamp which solves the abovementioned problems.

This object of the invention is achieved by providing a quick-release clamp for rotatably fitting a wheel, which comprises a wheel hub, between the teeth of a fork of a cycle, in which this quick-release clamp comprises a threaded shaft, which is designed to be rotatably fitted through the wheel hub, and comprises first and second clamping means which are designed to be attached at the respective ends of the threaded shaft, in which these clamping means are a first and a second cam handle, with each cam handle comprising an eccentric part which, after the cam handle has been fitted on the threaded shaft, is rotatable about an axis at right angles to the threaded shaft and eccentric with respect to this eccentric part, and comprises a handle, which is connected to the eccentric part in order to rotate the eccentric part with respect to the threaded shaft by means of this handle and in which these clamping means, after they have been fitted on the threaded shaft, are rotatable between an open position, intended to fit the wheel in the fork or to remove it therefrom, and a closed position, intended to clamp the wheel with the wheel hub rotatably between the teeth of the fork, with the first end of said threaded shaft being provided with a left-hand external screw thread and the second end of said threaded shaft being provided with a right-hand external screw thread.

By means of such a quick-release clamp, it is possible to fit and remove a wheel particularly easily, without having to use hand tools, since sufficient clearance can be created using two clamping means.

When initially adjusting the position of the clamping means on the threaded shaft to an intermediate distance which corresponds to a certain distance between the teeth of a fork, the clamping means can, in addition, be rotated simultaneously towards one another or away from one another via these screw threads on the threaded shaft, as a result of the left-hand screw thread at the one end and the right-hand screw thread at the other end. In this manner, the position between these clamping means is continuously variable, while the clamping means are always aligned with respect to one another and are not rotated with respect to one another. Even when fixed adjustment positions with respect to the threaded shaft are provided, as is described below for a preferred embodiment, the clamping means can be adjusted over smaller distances than when these clamping means are rotated through an entire turn of the screw, as is the case in the prior art. Using such a quick-release clamp, it is thus possible to set an ideal clamping force for a whole range of wheels and a whole range of possible distances between the teeth of the forks between which these wheels have to be fitted.

Preferably, for this purpose the left-hand screw thread of the first end has the same pitch as the right-hand screw thread of the second end.

The handle of a specific embodiment of said cam handle is provided on the eccentric part of the corresponding cam handle so as to be detachable.

With some kinds of cycles, such as for example motorcycles, this handle has to be made relatively large in order to be able to exert the required clamping force manually and in a simple manner, in order to safely and reliably fit the wheel between the teeth of the fork. In this case, it is useful if this handle can be removed once the wheel has been fitted and can be re-attached when the wheel has to be removed again. This handle may, for example, be designed in such a manner that it can easily be carried along during cycling, so that it is always to hand.

Preferably, according to the present invention, when the clamping means are attached to the threaded shaft, the position of at least one of these clamping means is adjustable. Still more preferably, the position of each of the two clamping means is adjustable.

To this end, preferably at least one clamping means is provided with an internal screw thread which corresponds to the external screw thread of the threaded shaft, with the position of this clamping means being adjustable by rotating this clamping means along this screw thread with respect to the threaded shaft.

In order to be able to adjust the position of the clamping means of such a quick-release clamp in a simple manner, the threaded shaft is furthermore preferably provided with engagement means designed to be engaged with a hand tool in order to rotate this threaded shaft, with the position of the clamping means with respect to one another being adjusted upon rotation of the threaded shaft after the clamping means have been fitted on the threaded shaft.

When the clamping means are arranged in line with respect to one another on both ends of the threaded shaft and rotatably with respect to this threaded shaft, these clamping means will, upon rotation of the threaded shaft, be moved towards one another or away from one another on the threaded shaft, as a result of which it is possible to fit a narrower or wider wheel in a narrower or wider fork, respectively. In this manner, it is possible to use one single type of quick-release clamp to fit wheels of different dimensions in a corresponding fork.

These engagement means may, for example, be of a simple design in the form of a slot on an end of this threaded shaft, with which a flat screwdriver can engage. These engagement means may, however, equally well be in the form of a crosshead with which a screwdriver can engage, or of a socket head with which a socket head wrench can engage, etc.

After initial adjustment of the position of the clamping means on the threaded shaft, these are preferably fixed securely in order to ensure that the wheel is fixed safely and reliably. Therefore, it should not be possible for these clamping means to come loose easily after the wheel has been fitted. When the cycle is in use, the wheel should not break free from the fork under extreme conditions.

In order to fix the clamping means, the latter may, for example after adjustment, be welded to the threaded shaft or may be fixed using an adhesive suitable for fixing components to a screw thread, etc.

According to the invention, it is possible to provide both fixed systems with a fixed position of the clamping means after initial adjustment for certain dimensions of the fork of the cycle, intended, for example, for specific wheels of specific bicycles, and adjustable systems which can be used for various cycles and wheels of various dimensions. With the first systems, the clamping means are securely fixed to the screw thread, while with the second systems the clamping means are releasably fixed on the screw thread.

In addition, these clamping means are preferably fixed in such a manner that they can be detached again, in order not to have to replace the entire quick-release clamp when these clamping means become faulty, but for example only the faulty part.

If these are, for example, welded onto the threaded shaft, they can be detached by loosening the weld again by means of a small bore. If they have been fixed by means of adhesive, they can be detached again by means of a solvent which is suitable for dissolving the adhesive.

Still more preferably, these clamping means may be fixed in a more simple detachable way. To this end, in a further preferred embodiment of a quick-release clamp according to the present invention, fixing means are provided, designed to fix the position of the clamping means with respect to the threaded shaft after the clamping means have been mounted on this threaded shaft.

In a specific embodiment of a quick-release clamp according to the present invention, the clamping means are provided with a socket screw as fixing means in order to fix these with this socket screw with respect to said threaded shaft.

If this socket screw is tightened as far as the screw thread in order to be able to fix the clamping means on this threaded shaft, the former is preferably made from plastic in order not to damage the threaded shaft.

In a preferred embodiment of such a quick-release clamp, the latter is not completely continuously variable, but each end of the threaded shaft is provided with two or more flattened sides or slots in the longitudinal direction and at least near the screw thread, with the flattened sides or slots at the one end being in line with the flattened sides or slots at the other end, and with the fixing means and, more specifically the socket screws on these flattened sides, being able to engage with these slots, respectively, in order to be able to fix the clamping means on this threaded shaft. In this case, the socket screws are preferably made from metal and still more preferably from stainless steel.

These flattened sides or slots provide fixed adjustment positions for the clamping means with respect to the threaded shaft. Thus, it is still possible to achieve a more refined adjustment when adjusting the distance between the clamping means than is the case with the prior art. As a result of the fact that a plurality of flattened sides or slots are provided, the clamping means do not have to be rotated through an entire turn of the screw, but only up to the point where the fixing means can engage with the next flattened side or the next slot, respectively.

As an alternative to the socket screw, a lock nut may be provided on the quick-release clamp for fixing the clamping means to the threaded shaft.

In cases where obstacles, such as for example a gear-changing apparatus near the wheel of a cycle, are present, the quick-release clamp may have a longer threaded shaft, so that the quick-release clamp can, if desired, also accommodate these additional obstacles, in addition to the wheel hub and the teeth of the fork of the cycle.

In cases where obstacles come close to the handle of a cam handle, this handle can, if desired, be made shorter. Thus, a quick-release clamp may be provided with a cam handle with a relatively short handle at one end of the threaded shaft and with a cam handle with a relatively long handle at the other end of the threaded shaft. Both cam handles leave sufficient clearance for the wheel to be fitted in the fork or removed therefrom in a simple manner. When fixing the wheel between the teeth of the fork, it is then possible to first rotate the corresponding cam handle from the open position to the closed position using the short handle, with only a part of the clearance between the clamping means and the teeth of the fork of the cycle being eliminated, but no clamping force being achieved yet. Subsequently, the longer handle can be used to rotate the corresponding cam handle from the open position to the closed position and thus achieve the required clamping force by means of this longer handle.

A quick-release clamp such as described above is furthermore preferably provided with spring elements which are provided between the clamping means on the threaded shaft and which are designed to be fitted between a clamping means and a corresponding tooth of the fork of the cycle. These spring elements are tensioned between a clamping means and a corresponding tooth of the fork of the cycle when the clamping means are rotated to the closed position. Upon rotation of the clamping means to the open position, these springs automatically push the clamping means away from the teeth of the fork of the cycle by a certain distance, thus automatically creating the required clearance in order to allow the wheel to be fitted in and removed from the fork in a simple manner. These spring elements may, for example, be designed in the shape of metal coiled springs.

The object of the present invention is in addition achieved by means of a wheel which comprises at least one quick-release clamp according to the present invention.

Finally, the object of the invention is also achieved by means of a cycle which comprises at least one quick-release clamp according to the present invention.

The present invention will be described in more detail below with reference to the following detailed description of some preferred embodiments of a quick-release clamp according to the present invention. The aim of this description is solely to give illustrative examples and to indicate further advantages and features of these embodiments, and can therefore by no means be interpreted as a limitation of the area of application of the invention or of the patent rights which are claimed in the claims.

In the detailed description, reference numerals are used to refer to the attached drawings, in which:
- ***Fig. 1*** shows the threaded shaft of a first preferred quick-release clamp in front view;
- ***Fig. 2*** shows the first preferred quick-release clamp in front view;
- ***Fig. 3*** shows the axle of the eccentric part of the cam handle of this first preferred quick-release clamp in front view;
- ***Fig. 4*** shows the first preferred quick-release clamp in an open position fitted in the wheel hub of a wheel which is arranged between the teeth of the fork of a cycle;
- ***Fig. 5*** shows a second preferred quick-release clamp in exploded perspective view; and
- ***Fig. 6*** shows a detailed perspective view of an end of the threaded shaft of this second preferred quick-release clamp.

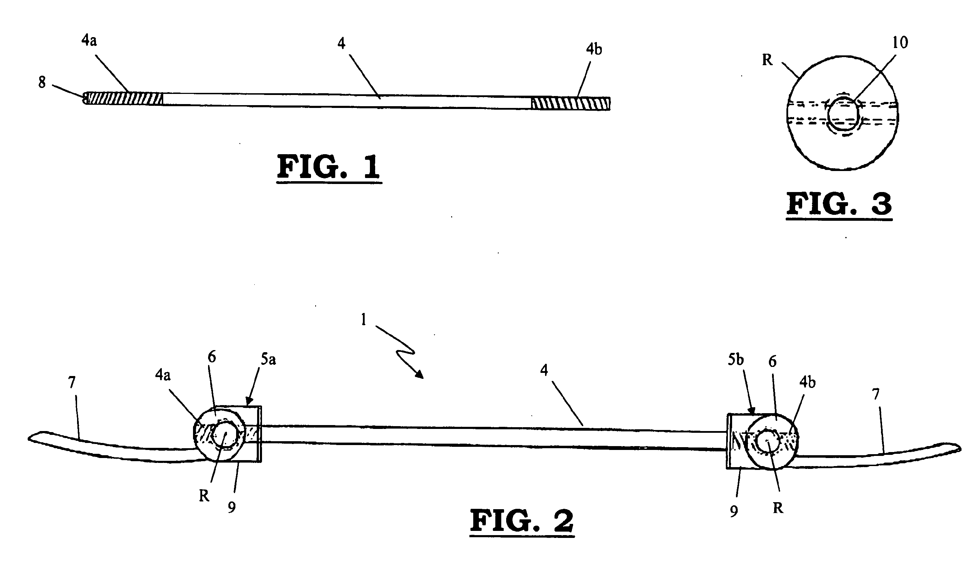

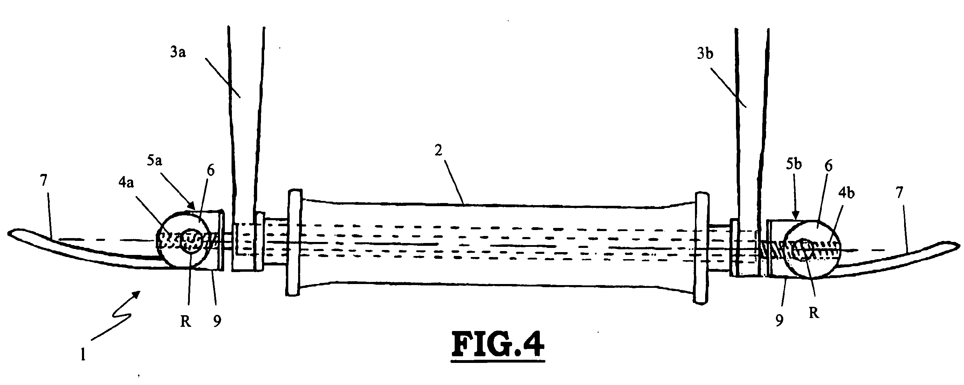

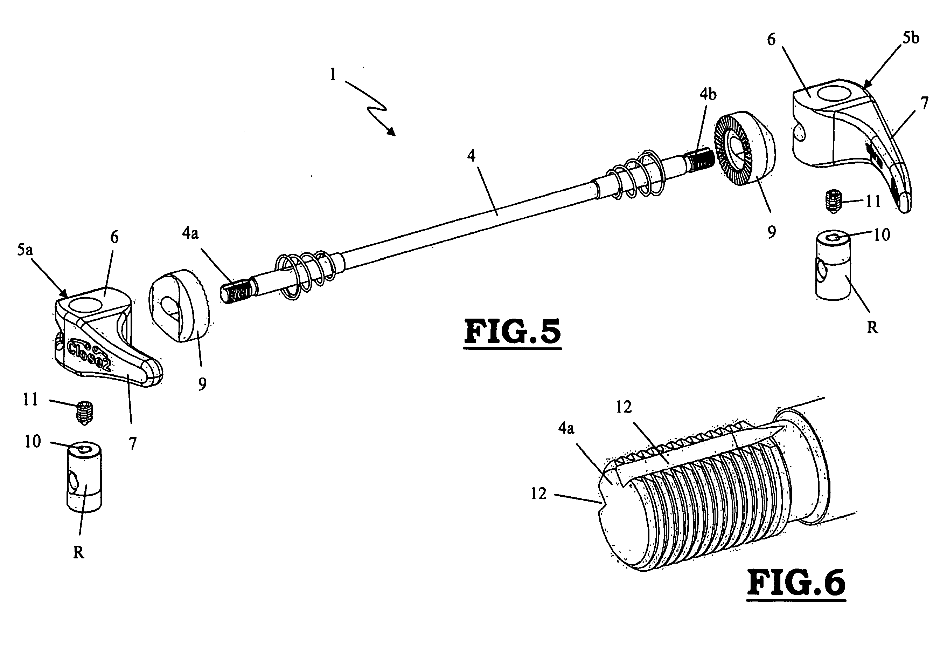

The preferred quick-release clamps (1), as shown in Figs. 2 and 5, are provided for rotatably fitting a wheel, which comprises a wheel hub (2), between the teeth (3a, 3b) of a fork of a cycle, as is illustrated in Fig. 4, with the preferred quick-release clamp (1) from Fig. 2 as quick-release clamp (1).

These quick-release clamps (1) comprise a threaded shaft (4), which is designed to be rotatably fitted through the wheel hub (2). This threaded shaft (4) is an axle, the first end (4a) of which is provided with a left-hand external screw thread and the second end (4b) of which is provided with a right-hand external screw thread. These left-hand and right-hand screw threads preferably have the same pitch. The threaded shaft (4) is preferably made from metal, but could also be made from titanium, plastic, etc.

In addition, these quick-release clamps (1) comprise a first and a second cam handle (5a, 5b) as clamping means which are intended to be fixed to the respective ends (4a, 4b) of the threaded shaft (4), and which, following fixing to the threaded shaft (4), are rotatable between an open position, intended to fit the wheel in the fork or remove it therefrom, and a closed position, intended to clamp the wheel with the wheel hub (2) rotatably between the teeth (3a, 3b) of the fork. These cam handles (5a, 5b) may, for example, be made from metal, but may equally well be made from carbon, titanium, plastic, aluminium, etc.

Each of said cam handles (5a, 5b) comprises an eccentric part (6) which, following fitting of the corresponding cam handle (5a, 5b) to the threaded shaft (4), is rotatable about an axis (R) at right angles to the threaded shaft (4) and eccentric with respect to this eccentric part (6). This axis (R) is also physically present as an axle (R) which is fitted through a bore in the eccentric part (6) and is provided on the threaded shaft (4) together with the eccentric part (6). By rotating this eccentric part (6) about this axle (R), the corresponding cam handle (5a, 5b) can be moved from said open position to its closed position and vice versa.

These cam handles (5a, 5b) furthermore also comprise a handle (7) which is connected to the corresponding eccentric part (6) in order to rotate this eccentric part (6) by means of this handle (7) with respect to the threaded shaft (4). The length of this handle (7) is preferably chosen such that a good lever action is achieved so as to be able to produce the required tensioning force with the cam handle (5a, 5b).

In the embodiment of a quick-release clamp (1) as illustrated in Fig. 5, the first cam handle (5a) is provided with a short handle (7), whereas the second cam handle (5b) is provided with a long handle (7). When fitting the wheel between the teeth (3a, 3b) of the fork, the first cam handle (5a) has to be rotated first from the open position to the closed position using the short handle (7). This cam handle (5a) may also be set to the correct position for this specific cycle. Furthermore, the longer handle (7) of the second cam handle (5b) can be used to rotate this second cam handle (5b) from the open position to the closed position, thereby producing the required clamping force by means of this long handle (7).

In addition, these cam handles (5a, 5b) also comprise pressure pieces (9). These pressure pieces (9) are designed to be between eccentric parts (6) after the cam handles (5a, 5b) have been fitted. On that side which is turned towards a corresponding eccentric part (6), these pressure pieces (9) are provided with a concave rounded surface, which is designed to match the surface of the eccentric part (6), so that this eccentric part (6) always touches the corresponding pressure piece (9) with the same surface when the eccentric part (6) is rotated. On the side which is situated opposite this rounded surface, the pressure piece (9) is provided with a flat surface which is at right angles to the threaded shaft (4). The pressure piece (9) is designed in such a manner that, when the wheel has been fitted between the teeth of the fork of the cycle and the quick-release clamp (1) clamps, it touches the teeth (3a, 3b) of the fork of the cycle with this flat surface. In order to achieve a maximum grip between the quick-release clamp (1) and the teeth (3a, 3b) when the quick-release clamp (1) clamps, said flat surface is preferably provided with grooves, as is shown with the quick-release clamp (1) from Fig. 5.

In order to be able to fit a wheel by means of such a quick-release clamp (1) between the teeth (3a, 3b) of a fork of a cycle, this quick-release clamp (1) is first rotatably fitted in the wheel hub (2) of this wheel and an initial adjustment is carried out. Following the initial adjustment of the quick-release clamp (1), the wheel can be fitted in the fork and removed therefrom in a simple manner when the cam handles (5a, 5b) are in their open position and are clamped between the teeth (3a, 3b) of this fork by moving the cam handles (5a, 5b) to their closed position after the wheel has been fitted between the teeth (3a, 3b) of the fork. In order to achieve this, the quick-release clamp (1) does not have to be re-adjusted each time, but rather this wheel which is provided with this quick-release clamp (1) can, by means of this quick-release clamp (1), be fitted in each case in the same kind of fork without further adjustments being necessary.

In order to fit the quick-release clamp (1) in the wheel hub (2) and perform the initial adjustment, one proceeds as follows. First, the threaded shaft (4), as shown in Fig. 1, is introduced into the wheel hub. If desired, a cam handle (5a, 5b) may already be fitted at one end of this threaded shaft (4), optionally in a fixed position, before this threaded shaft (4) is introduced into the wheel hub (2). Subsequently, the second cam handle (5a, 5b) is fitted to the other end of the threaded shaft (4), or both cam handles (5a, 5b) are each fitted at a corresponding end of the threaded shaft (4). In order to be able to fit the cam handles (5a, 5b) on this threaded shaft (4), the eccentric parts (6) and the pressure pieces (9) and the axle (R) are provided with an internal screw thread corresponding to the external screw thread of the threaded shaft (4).

The cam handles (5a, 5b) are aligned with respect to one another by rotating them along this screw thread on the threaded shaft (4).

In the embodiment of a quick-release clamp (1) as illustrated in Fig. 2, the threaded shaft (4) is furthermore provided with a slot (8) at one end, with which a flat screwdriver can engage in order to rotate the threaded shaft (4), as is illustrated in Fig. I. When the threaded shaft (4) is rotated, the cam handles (5a, 5b) can be moved towards one another or away from one another on the threaded shaft (4) in order to produce a relatively small or large intermediate distance between the cam handles (5a, 5b) so as to be able to fit a relatively narrow or wide wheel, respectively, in a relatively narrow or wide fork, respectively. In this manner, the cam handles (5a, 5b) are displaced with respect to one another on the threaded shaft (4) until an intermediate distance is achieved which makes it possible to produce an optimum tensioning force for a certain type of wheel and a certain type of fork.

With the embodiment of a quick-release clamp (1) illustrated in Fig. 5, the cam handles (5a, 5b) are manually rotated with respect to the threaded shaft (4).

When the position of the cam handles (5a, 5b) has been adjusted in this manner, the latter are preferably fixed in this position on the threaded shaft (4) in order to ensure that the wheel is securely and reliably fitted in the fork. In addition, this quick-release clamp (1) is then set in such a manner that the wheel can repeatedly be fitted in and removed from this fork, without this quick-release clamp (1) having to be adjusted again. Due to the large clearance which two such cam handles (5a, 5b) can produce when they are placed in their open position, a wheel can be fitted in and removed from the fork in a simple manner.

In order to be able to fix these cam handles (5a, 5b) in a certain position on the threaded shaft (4), the latter are provided with a socket screw (11), which can be fitted in the bore (10) which is provided in the centre of the axle (R).

In the embodiment of a quick-release clamp (1) as illustrated in Fig. 2, where the socket screw (11) is screwed against the screw thread of the threaded shaft (4), said socket screw (11) is preferably made from plastic, so that it will not damage the threaded shaft (4) when the cam handle (5a, 5b) is fixed on the threaded shaft (4) by means of this socket screw (11).

In the embodiment of a quick-release clamp (1) as illustrated in Fig. 5, each end (4a, 4b) of the threaded shaft (4) is provided in the longitudinal direction with two or more slots (12), as is illustrated in more detail in Fig. 6. The socket screw (11) can in this case engage with these slots (12) in order to fix the cam handle (5a, 5b) on this threaded shaft (4). In this case, the socket screw (11) is preferably made from metal and still more preferably made from stainless steel. When adjusting the cam handles (5a, 5b), it should always be ensured that the socket screw (11) can engage with these slots (12) rather than with the screw thread.

This threaded shaft (4) could also be provided with flattened sides instead of with these slots (12).

If such a quick-release clamp (1) is for example used to fit a bicycle wheel in a fork of a standard bicycle, the threaded shaft (4) may, for example, be provided with an M5 screw thread, whereas the socket screw (11) may then, for example, be provided with an M4 screw thread.

## Claims

1. Quick-release clamp (1) for rotatably fitting a wheel, which comprises a wheel hub (2), between the teeth (3a, 3b) of a fork of a cycle, in which this quick-release clamp (1) comprises a threaded shaft (4), which is designed to be rotatably fitted through the wheel hub (2), and comprises first and second clamping means (spa, 5b) which are designed to be attached at the respective ends (4a, 4b) of the threaded shaft (4), in which these clamping means (Sa, 5b) are a first and a second cam handle (5a, 5b), with each cam handle (5a, 5b) comprising an eccentric part (6) which, after the cam handle (5a, 5b) has been fitted on the threaded shaft (4), is rotatable about an axis (R) at right angles to the threaded shaft (4) and eccentric with respect to this eccentric part (6), and comprises a handle (7), which is connected to the eccentric part (6) in order to rotate the eccentric part (6) with respect to the threaded shaft (4) by means of this handle (7) and in which these clamping means (5a, 5b), after they have been fitted on the threaded shaft (4), are rotatable between an open position, intended to fit the wheel in the fork or to remove it therefrom, and a closed position, intended to clamp the wheel with the wheel hub (2) rotatably between the teeth (3a, 3b) of the fork, **characterized in that** the first end (4a) of said threaded shaft (4) is provided with a left-hand external screw thread and the second end (4b) of said threaded shaft (4) is provided with a right-hand external screw thread.

2. Quick-release clamp (1) according to Claim 1, **characterized in that** the left-hand screw thread of the first end (4a) has the same pitch as the right-hand screw thread of the second end (4b).

3. Quick-release clamp (1) according to one of the preceding claims, **characterized in that** the handle (7) of said cam handle (5a, 5b) is provided on the eccentric part (6) of the corresponding cam handle (5a, 5b) so as to be detachable.

4. Quick-release clamp (1) according to one of the preceding claims, **characterized in that**, when the clamping means (5a, 5b) are attached to the threaded shaft (4), the position of at least one of these clamping means (5a, 5b) is adjustable.

5. Quick-release clamp (1) according to Claim 4, **characterized in that** at least one clamping means (5a, 5b) is provided with an internal screw thread which corresponds to the external screw thread of the threaded shaft (4), with the position of this clamping means (5a, 5b) being adjustable by rotating this clamping means (5a, 5b) along this screw thread with respect to the threaded shaft (4).

6. Quick-release clamp (1) according to Claim 5, **characterized in that** the threaded shaft (4) is provided with engagement means (8) designed to be engaged with a hand tool in order to rotate this threaded shaft (4), with the position of the clamping means (5a, 5b) with respect to one another being adjusted upon rotation of the threaded shaft (4) after the clamping means (5a, 5b) have been fitted on the threaded shaft (4).

7. Quick-release clamp (1) according to one of the preceding claims, **characterized in that** it is provided with fixing means (9), designed to fix the position of the clamping means (5a, 5b) with respect to the threaded shaft (4) after the clamping means (5a, 5b) have been mounted on this threaded shaft (4).

8. Quick-release clamp (1) according to Claim 7, **characterized in that** the clamping means (5a, 5b) are provided with a socket screw as fixing means (11) in order to fix these with this socket screw (11) with respect to said threaded shaft (4).

9. Quick-release clamp (1) according to Claim 7 or 8, **characterized in that** each end (4a, 4b) of the threaded shaft (4) is provided with two or more flattened sides or slots (12) in the longitudinal direction and at least near the screw thread, with the flattened sides or slots at the one end (4a) being in line with the flattened sides or slots at the other end (4b), and with the fixing means (11) being able to engage with these flattened sides or with these slots (12), respectively, in order to fix the clamping means (5a, 5b) on this threaded shaft (4).

10. Wheel, **characterized in that** it comprises at least one quick-release clamp (1) according to one of the preceding claims.

11. Cycle, **characterized in that** it comprises at least one quick-release clamp (1) according to one of Claims 1 to 9.

## Patentansprüche

1. Schnellverschluss-Spanner (1) zum drehbaren Befestigen eines Laufrads, das eine Radnabe (2) umfasst, zwischen den Zähnen (3a, 3b) einer Gabel eines Zweirads, wobei dieser Schnellverschluss-Spanner (1) eine Gewindeachse (4) umfasst, die so ausgelegt ist, dass sie drehbar durch die Radnabe (2) befestigt werden kann, ferner umfassend erste und zweite Spannmittel (5a, 5b), die so ausgelegt sind, dass sie an den jeweiligen Enden (4a, 4b) der Gewindeachse (4) befestigt werden können, wobei diese Spannmittel (5a, 5b) ein erster und ein zweiter Steuerungsscheibenhebel (5a, 5b) sind, wobei jeder Steuerungsscheibenhebel (5a, 5b) einen Exzenterteil (6) umfasst, der nach Befestigen des Steuerungsscheibenhebels (5a, 5b) auf der Gewindeachse (4) um eine Achse (R) drehbar ist, die im rechten Winkel zur Gewindeachse (4) verläuft und in Bezug auf diesen Exzenterteil (6) exzentrisch ist, ferner umfassend einen Hebel (7), der mit dem Exzenterteil (6) verbunden ist, um den Exzenterteil (6) in Bezug auf die Gewindeachse (4) mithilfe dieses Hebels (7) zu drehen, und wobei diese Spannmittel (5a, 5b) nach deren Befestigung auf der Gewindeachse (4) zwischen einer offenen Position, in der das Laufrad in der Gabel befestigt oder aus dieser herausgenommen werden soll, und einer geschlossenen Position, in der das Laufrad mit der Radnabe (2) zwischen den Zähnen (3a, 3b) der Gabel drehbar festgespannt werden soll, drehbar sind, **dadurch gekennzeichnet, dass** das erste Ende (4a) der Gewindeachse (4) mit einem linksgängigen Außenschraubgewinde versehen ist und das zweite Ende (4b) der Gewindeachse (4) mit einem rechtsgängigen Außenschraubgewinde versehen ist.

2. Schnellverschluss-Spanner (1) nach Anspruch 1, **dadurch gekennzeichnet, dass** das linksgängige Schraubgewinde des ersten Endes (4a) die gleiche Teilung wie das rechtsgängige Schraubgewinde des zweiten Endes (4b) aufweist.

3. Schnellverschluss-Spanner (1) nach einem der vorhergehenden Ansprüche, **dadurch gekennzeichnet, dass** der Hebel (7) des Steuerungsscheibenhebels (5a, 5b) auf dem Exzenterteil (6) des entsprechenden Steuerungsscheibenhebels (5a, 5b) bereitgestellt ist, so dass er abnehmbar ist.

4. Schnellverschluss-Spanner (1) nach einem der vorhergehenden Ansprüche, **dadurch gekennzeichnet, dass**, wenn die Spannmittel (5a, 5b) auf der Gewindeachse (4) befestigt sind, die Position von mindestens einem dieser Spannmittel (5a, 5b) verstellbar ist.

5. Schnellverschluss-Spanner (1) nach Anspruch 4, **dadurch gekennzeichnet, dass** mindestens eines dieser Spannmittel (5a, 5b) mit einem Innenschraubgewinde versehen ist, das dem Außenschraubgewinde der Gewindeachse (4) entspricht, wobei die Position des Spannmittels (5a, 5b) durch Drehen des Spannmittels (5a, 5b) entlang des Schraubgewindes in Bezug die Gewindeachse (4) verstellt werden kann.

6. Schnellverschluss-Spanner (1) nach Anspruch 5, **dadurch gekennzeichnet, dass** die Gewindeachse (4) mit Eingreifmitteln (8) versehen ist, in die mit einem Handwerkzeug eingegriffen werden soll, um die Gewindeachse (4) zu drehen, wobei die Position der Spannmittel (5a, 5b) zueinander durch Drehen der Gewindeachse (4) nach Befestigen der Spannmittel (5a, 5b) auf der Gewindeachse (4) eingestellt wird.

7. Schnellverschluss-Spanner (1) nach einem der vorhergehenden Ansprüche, **dadurch gekennzeichnet, dass** er mit Fixiermitteln (9) versehen ist, mit denen die Position der Spannmittel (5a, 5b) in Bezug auf die Gewindeachse (4) nach Anbringen der Spannmittel (5a, 5b) auf der Gewindeachse (4) fixiert werden soll.

8. Schnellverschluss-Spanner (1) nach Anspruch 7, **dadurch gekennzeichnet, dass** die Spannmittel (5a, 5b) mit einer Inbusschraube als Fixiermittel (11) ausgestattet sind, um sie mit dieser Inbusschraube (11) in Bezug auf die Gewindeachse (4) zu fixieren.

9. Schnellverschluss-Spanner (1) nach Anspruch 7 oder 8, **dadurch gekennzeichnet, dass** jedes Ende (4a, 4b) der Gewindeachse (4) mit zwei oder mehr abgeflachten Seiten oder Schlitzen (12) in Längsrichtung und zumindest in der Nähe des Schraubgewindes versehen ist, wobei die abgeflachten Seiten oder Schlitze an dem einen Ende (4a) in einer Linie mit den abgeflachten Seiten oder Schlitzen an dem anderen Ende (4b) angeordnet sind, und wobei die Fixiermittel (11) imstande sind, jeweils in die abgeflachten Seiten oder Schlitze (12) einzugreifen, um die Spannmittel (5a, 5b) auf der Gewindeachse (4) zu fixieren.

10. Laufrad, **dadurch gekennzeichnet, dass** es mindestens einen Schnellverschluss-Spanner (1) nach einem der vorhergehenden Ansprüche umfasst.

11. Zweirad, dadurch gekerinzeichnet, dass es mindestens einen Schnellverschluss-Spanner (1) nach einem der Ansprüche 1 bis 9 umfasst.

## Revendications

1. Dispositif de serrage à libération rapide (1) pour installer une roue de façon rotative, qui comprend un moyeu de roue (2), entre les dents (3a, 3b) d'une fourche d'un cycle, dans lequel ce dispositif de serrage à libération rapide (1) comprend une tige filetée (4), qui est conçue pour être installée de façon rotative à travers le moyeu de roue (2), et comprend des premier et second moyens de serrage (5a, 5b) qui sont conçus pour être fixés au niveau des extrémités respectives (4a, 4b) de la tige filetée (4), dans lequel ces moyens de serrage (5a, 5b) sont des première et seconde poignées à came (5a, 5b), chaque poignée à came (5a, 5b) comprenant une partie excentrique (6) qui, après que la poignée à came (5a, 5b) a été installée sur la tige filetée (4), est rotative autour d'un axe (R) à angle droit par rapport à la tige filetée (4) et excentrique par rapport à cette partie excentrique (6), et comprend une poignée (7), qui est reliée à la partie excentrique (6) afin de faire tourner la partie excentrique (6) par rapport à la tige filetée (4) au moyen de cette poignée (7) et dans lequel ces moyens de serrage (5a, 5b), après qu'ils ont été installés sur la tige filetée (4), sont rotatifs entre une position ouverte, prévue pour installer la roue dans la fourche ou pour la retirer de celle-ci, et une position fermée, prévue pour serrer la roue avec le moyeu de roue (2) de façon rotative entre les dents (3a, 3b) de la fourche, **caractérisé en ce que** la première extrémité (4a) de ladite tige filetée (4) est pourvue d'un filet de vis à gauche externe et la seconde extrémité (4b) de ladite tige filetée (4) est pourvue d'un filet de vis à droite externe.

2. Dispositif de serrage à libération rapide (1) selon la revendication 1, **caractérisé en ce que** le filet de vis à gauche de la première extrémité (4a) possède le même pas que le filet de vis à droite de la seconde extrémité (4b).

3. Dispositif de serrage à libération rapide (1) selon une des revendications précédentes, **caractérisé en ce que** la poignée (7) de ladite poignée à came (5a, 5b) est prévue sur la partie excentrique (6) de la poignée à came correspondante (5a, 5b) afin d'être séparable.

4. Dispositif de serrage à libération rapide (1) selon une des revendications précédentes, **caractérisé en ce que**, lorsque les moyens de serrage (5a, 5b) sont fixés à la tige filetée (4), la position d'au moins un de ces moyens de serrage (5a, 5b) est réglable.

5. Dispositif de serrage à libération rapide (1) selon la revendication 4, **caractérisé en ce qu'**au moins un moyen de serrage (5a, 5b) est pourvu d'un filet de vis interne qui correspond au filet de vis externe de la tige filetée (4), la position de ce moyen de serrage (5a, 5b) étant réglable en faisant tourner ce moyen de serrage (5a, 5b) le long de ce filet de vis par rapport à la tige filetée (4).

6. Dispositif de serrage à libération rapide (1) selon la revendication 5, **caractérisé en ce que** la tige filetée (4) est pourvue de moyens de prise (8) conçus pour être en prise avec un outil à main afin de faire tourner cette tige filetée (4), la position des moyens de serrage (5a, 5b) l'un par rapport à l'autre étant réglée lors de la rotation de la tige filetée (4) après que les moyens de serrage (5a, 5b) ont été installés sur la tige filetée (4).

7. Dispositif de serrage à libération rapide (1) selon une des revendications précédentes, **caractérisé en ce qu'**il est pourvu de moyens de fixation (9), conçus pour fixer la position des moyens de serrage (5a, 5b) par rapport à la tige filetée (4) après que les moyens de serrage (5a, 5b) ont été montés sur cette tige filetée (4).

8. Dispositif de serrage à libération rapide (1) selon la revendication 7, **caractérisé en ce que** les moyens de serrage (5a, 5b) sont pourvus d'une vis creuse (11), à titre de moyens de fixation, afin de les fixer avec cette vis creuse (11) par rapport à ladite tige filetée (4).

9. Dispositif de serrage à libération rapide (1) selon la revendication 7 ou 8, **caractérisé en ce que** chaque extrémité (4a, 4b) de la tige filetée (4) est pourvue de deux, ou plus, côtés aplatis ou fentes (12) dans la direction longitudinale et au moins près du filet de vis, les côtés aplatis ou fentes à la première extrémité (4a) étant en ligne avec les côtés aplatis ou fentes à l'autre extrémité (4b), et les moyens de fixation (11) étant capables d'entrer en prise avec ces côtés aplatis ou avec ces fentes (12), respectivement, afin de fixer les moyens de serrage (5a, 5b) sur cette tige filetée (4).

10. Roue, **caractérisée en ce qu'**elle comprend au moins un dispositif de serrage à libération rapide (1) selon une des revendications précédentes.

11. Cycle, **caractérisé en ce qu'**il comprend au moins un dispositif de serrage à libération rapide (1) selon une des revendications 1 à 9.
